# EUROPÄISCHE PATENTSCHRIFT

(11) **EP 2 239 061 B1**
(45) Veröffentlichungstag und Bekanntmachung des Hinweises auf die Patenterteilung: **15.05.2013**
(21) Anmeldenummer: 10002180.7
(22) Anmeldetag: 03.03.2010
(51) Int. Cl.: F16H 13/02, F16H 13/10, B07B 1/22

(54) **Siebtrommelsystem**
Sieve drum system
Système de tambour cribleur

(30) Priorität: 07.04.2009 DE 202009005324 U
(43) Veröffentlichungstag der Anmeldung: 13.10.2010
(73) Patentinhaber: Komptech Umwelttechnik Deutschland GmbH, 59302 Oelde (DE)
(72) Erfinder: Thielepape, Bernd, 31675 Bückeburg (DE)
(74) Vertreter: Laufhütte, Dieter

(56) Entgegenhaltungen:
- NL-C1- 1 007 235
- US-A- 1 575 719
- US-A1- 2004 060 847
- US-A1- 2006 237 346

## Beschreibung

Die vorliegende Erfindung betrifft ein Siebtrommelsystem mit einer Siebtrommel, wobei die Siebtrommel durch wenigstens ein auf der Außenwandung der Siebtrommel abrollendes Antriebsrad vorzugsweise kraftschlüssig antreibbar ist.

Derartige Siebtrommelsysteme, insbesondere mobile Siebtrommelsysteme, wie sie beispielsweise auf Fahrzeuganhängern oder Fahrzeugaufbauten angeordnet werden, weisen Siebtrommeln auf, die beispielsweise mit einer Kette angetrieben werden. Es handelt sich somit um eine indirekte Antriebslösung der Siebtrommel, was unter Anderem dem Umstand geschuldet ist, dass direkte Antriebslösungen, bei denen beispielsweise Antriebsräder direkt kraftschlüssig die Siebtrommel antreiben, unter bestimmten Umgebungsbedingungen ausfallen können.

So kann es beispielsweise bei Mobilmaschinen mit Siebtrommeln, die bei jeder Witterung im Freien betrieben werden, immer wieder zum Durchrutschen der Antriebsräder kommen, so dass die Siebtrommel nicht angetrieben wird. Dies ist insbesondere im Winter, bei Nebel, starkem Regen oder ungünstigen Umgebungsbedingungen in einer Halle der Fall, denn in diesem Fall können die zur Verfügung stehenden Reibkräfte der auf der Außenwandung der Siebtrommel abrollenden Antriebsräder nicht ausreichend für einen Antrieb der Siebtrommel sein.

NL 1 007 235 C1 offenbart ein Siebtrommelsystem mit einer Siebtrommel, welche durch wenigstens ein auf einer Außenwandung der Siebtrommel abrollendes Antriebsrad angetrieben werden kann. Das Siebtrommelsystem weist ein als rotierendes Mittel dienendes Rad, welches sich an einem Schwenkarm rund um eine Achse drehen kann und über den Umkreis der rotierenden Siebtrommel läuft.

US 2006/237346 A1 offenbart ebenfalls ein Siebtrommelsystem, bei welchem die Siebtrommel durch zwei abrollende Antriebsräder angetrieben wird, wobei eine sich auf der der Antriebsräder gegenüberliegenden Seite der Siebtrommel befindende rotierende Bürste als ein rutschhemmendes Mittel dient.

Es ist daher die Aufgabe der vorliegenden Erfindung, ein Siebtrommelsystem der eingangs genannten Art in vorteilhafterweise derart weiterzubilden, dass dieses einerseits direkt antreibbar ist und unabhängig von den Umgebungsbedingungen, insbesondere von Unrundheiten des Siebtrommelkörpers, sicher betreibbar ist.

Diese Aufgabe wird erfindungsgemäß gelöst durch ein Siebtrommelsystem mit den Merkmalen des Anspruchs 1. Danach ist vorgesehen, dass ein Siebtrommelsystem eine Siebtrommel aufweist, wobei die Siebtrommel durch wenigstens ein auf einer Außenwandung der Siebtrommel abrollendes Antriebsrad antreibbar ist bzw. vorzugsweise kraftschlüssig antreibbar ist. Es ist wenigstens ein rutschhemmendes Mittel vorgesehen, mittels dessen mittelbar und/oder unmittelbar ein Durchrutschen des Antriebsrades verhinderbar und/oder verringerbar ist. Das erfindungsgemäße Siebtrommelsystem weist wenigstens ein Ausgleichsmittel auf, welches wenigstens ein federndes Mittel umfasst oder als solches ausgeführt ist, wobei das Ausgleichsmittel mit dem wenigstens einen rutschhemmenden Mittel verbunden ist oder in Verbindung steht, so dass eine Ausgleichsbewegung des rutschhemmenden Mittels realisiert werden kann.

Durch das erfindungsgemäße System wird erreicht, dass beispielsweise bei Umgebungsbedingungen, bei denen der Reibungskoeffizient zwischen Antriebsrad und der Außenwandung der Siebtrommel verringert ist, durch das das Durchrutschen verhindernde, rutschhemmende Mittel die Reibkraft erhöht werden kann. Hierdurch wird es möglich, die Siebtrommel auch bei erschwerten Bedingungen betreiben zu können. Des Weiteren werden aufgrund der federnden Mittel bzw. einer Feder Ausgleichsbewegungen, insbesondere Ausgleichsbewegungen ohne Reduzierung der benötigten Anpresskraft ermöglicht.

Vorteilhafterweise ist vorgesehen, dass die Antriebsräder unterhalb der Siebtrommel angeordnet sind, vorzugsweise insgesamt vier symmetrisch angeordnete Antriebsräder, die jeweils direkt angetrieben werden. Das Antriebsrad bzw. die Antriebsräder können beispielsweise elektrisch, hydraulisch oder mit einer sonstigen geeigneten Antriebsform angetrieben werden. Grundsätzlich ist auch denkbar, dass wenigstens ein gemeinsames Antriebssystem mit Getriebe vorgesehen ist, das die Antriebsräder oder Gruppen von Antriebsrädern antreibt. Auch ist es möglich, dass nur ein Antriebsrad, zwei oder drei Antriebsräder angetrieben werden.

Grundsätzlich ist denkbar, dass das rutschhemmende Mittel je nach Bedarf zuschaltbar ist und dass die Zuschaltung beispielsweise manuell, pneumatisch, elektrisch oder hydraulisch erfolgt.

Beispielsweise kann bzw. können das rutschhemmende Mittel oder die rutschhemmenden Mittel fluchtend oberhalb eines Antriebsrades angeordnet werden, d.h. dass die Antriebsräder und das rutschhemmende Mittel in einer senkrecht stehenden gemeinsamen Ebene angeordnet sind, wobei die Antriebsräder unterhalb der Siebtrommel und das rutschhemmende Mittel oberhalb der Siebtrommel angeordnet ist. Dies ist jedoch nicht zwingend erforderlich. Genausogut kann vorgesehen sein, dass das rutschhemmende Mittel beliebig entlang der Längachse der Siebtrommel angeordnet ist.

Vorteilhafter Weise kann das rutschhemmende Mittel seine Funktion unabhängig von der Drehrichtung der Siebtrommel bewirken.

Die Siebtrommel selbst liegt vorzugsweise direkt auf den Antriebsrädern auf, so dass sie bei normalen Umgebungsbedingungen durch ihr Eigengewicht eine ausreichende Reibung für den Antrieb bereitstellt. Sollte die Siebtrommel durchrutschen, kann die Reibung bzw. Reibungskraft zwischen Antriebsrad und Siebtrommel bzw. zwischen Antriebsrädern und Siebtrommel durch das rutschhemmende Mittel erhöht werden.

Darüber hinaus kann vorgesehen sein, dass das rutschhemmende Mittel eine Andrückrolle und/oder ein Andrückrad umfasst oder als solches ausgeführt ist. Hierdurch lässt sich vorteilhafter Weise das rutschhemmende Mittel zum Verhindern bzw. Verringern des Durchrutschens der Siebtrommel einfach realisieren.

Des Weiteren ist möglich, dass das rutschhemmende Mittel eigens angetrieben oder frei mitlaufend ausgeführt ist und/oder dass das rutschhemmende Mittel oder wenigstens ein Teil des rutschhemmenden Mittels auf der Außenwandung der Siebtrommel abrollbar ausgeführt ist und/oder dass das rutschhemmende Mittel axial zu der Siebtrommel verfahrbar ist, um einen Zugang zur Siebtrommel insbesondere für einen Siebtrommelwechsel zu ermöglichen. Insbesondere ist von Vorteil, dass durch die axiale Verfahrbarkeit des rutschhemmenden Mittels gegenüber der Siebtrommel das rutschhemmende Mittel nicht gesondert demontiert werden muss, wenn ein Siebtrommelwechsel oder ein Zugang zur Siebtrommel erforderlich ist.

Außerdem ist möglich, dass wenigstens ein Anstellmittel vorgesehen ist, mittels dessen das rutschhemmende Mittel gegen die Siebtrommel und/oder von der Siebtrommel abstellbar ist. Dadurch kann vorteilhafter Weise Betriebszuständen Rechnung getragen werden, bei denen ein Zwangsmitlauf des rutschhemmenden Mittels zum Verhindern oder Verringern des Durchrutschens des Antriebsrades nicht sinnvoll ist. Dies ist beispielsweise bei einem Betrieb im Freien bei günstigen Umgebungsbedingungen der Fall, wobei bereits das Eigengewicht der Siebtrommel ausreichend ist, um ein Durchrutschen der Siebtrommel gegenüber den Antriebsrädern zu verhindern.

Es kann vorgesehen sein, dass das rutschhemmende Mittel einen Gelenkarm umfasst, mittels dessen eine Andrückrolle und/oder ein Andrückrad an die Außenwandung der Siebtrommel an- und/oder abstellbar ist, oder dass das rutschhemmende Mittel ohne Gelenkarm ausgeführt ist und eine Andrückrolle und/oder ein Andrückrad umfasst, das an die Außenwandung der Siebtrommel an- und/oder abstellbar ist, insbesondere mittels einer senkrecht verstellbaren Mechanik an- und/oder abstellbar ist. Beispielsweise kann vorgesehen sein, dass die Andrückrolle und/oder das Andrückrad drehbar in dem Gelenkarm gelagert ist. Von Vorteil ist es insbesondere, wenn der Gelenkarm gemeinsam mit der im Gelenkarm gelagerten Andrückrolle bzw. dem Andrückrad an die Siebtrommel an- und abstellbar ausgeführt ist. Das An- und Abstellen an die Siebtrommel kann beispielsweise mittels des Anstellmittels erfolgen. Möglich ist beispielsweise, dass im Grundzustand oder Leerlauf bei nicht angetriebener Siebtrommel das rutschhemmende Mittel nicht angestellt ist und erst mit Anlaufen bzw. mit Einschalten der Siebtrommel angestellt wird. Auch ein bewußtes An- und Abstellen kann sinnvoll sein, z. B. ein Anstellen nur bei Bedarf.

Grundsätzlich ist es jedoch ebenfalls denkbar, dass das rutschhemmende Mittel direkt an die Siebtrommel anstellbar ist.

Von Vorteil ist es, wenn der Gelenkarm kopfseitig der Siebtrommel und/oder exzentrisch bezogen auf die Rotationsachse und/oder die Hochachse der Siebtrommel angeordnet ist. Dadurch ergibt sich der Vorteil, dass durch Hebeleffekte die Anpresskraft gut eingestellt werden kann. Ferner können hierdurch die für die Anstellung notwendigen Kräfte verringert oder gewandelt werden.

Grundsätzlich ist es aber auch möglich, dass eine Andrückrolle oder ein Andrückrad direkt ohne eine Gelenkarm oder einen Hebel an die Siebtrommel angestellt werden kann. Dies kann beispielsweise durch eine senkrecht zur Siebtrommel verstellbare Mechanik ermöglicht sein. Die Andrückrolle kann beispielsweise direkt an einem als senkrecht verstellbare Mechanik ausgeführten Anstellmittel angelenkt bzw. angeordnet sein.

Darüber hinaus ist denkbar, dass das Siebtrommelsystem einen Maschinenrahmen und/oder einen Materialbunker umfasst, aus dem vorzugsweise Siebgut der Siebtrommel zuführbar ist, wobei der Gelenkarm oder eine senkrecht hierzu verstellbare Mechanik des rutschhemmenden Mittels mittelbar und/oder unmittelbar am Maschinenrahmen und/oder Materialbunker angelenkt ist.

Ebenfalls ist denkbar, dass das rutschhemmende Mittel selbst am Materialbunker oder an einem geeigneten Rahmen des Siebtrommelsystems angelenkt ist.

Es ist möglich, dass das Anstellmittel einen Linearantrieb umfasst, der vorzugsweise endseitig an einem Ende des Gelenkarms angelenkt ist. Es ist möglich, dass die durch das rutschhemmende Mittel zusätzlich aufgebrachte Normalkraft beispielsweise über die Länge des Verstellweges des Linearantriebs, der mittelbar den Anpressdruck beeinflusst, eingestellt werden kann.

Bevorzugt wird es, wenn der Linearantrieb einen Hydraulikzylinder und/oder einen Pneumatikzylinder und/oder einen Elektrozylinder und/oder eine manuelle Spindel umfasst oder als solcher ausgeführt ist. Der Anpressdruck kann beispielsweise mittelbar über die Länge des Verstellweges bzw. des Hubes des Zylinders eingestellt werden.

Darüber hinaus kann vorgesehen sein, dass Ausgleichsmittel vorgesehen sind, mittels derer durch das rutschhemmende Mittel eine Ausgleichsbewegung durchführbar ist.

Das Ausgleichsmittel umfasst wenigstens ein federndes Mittel oder ist als solches ausgeführt. Der Begriff federndes Mittel ist nicht als auf Federn aller Art beschränkt auszulegen, sondern kann grundsätzlich durch jedes in der Funktion gleichwertige Mittel verwirklicht sein. Dadurch lassen sich beispielsweise Unwuchten oder Unrundheiten des Siebtrommelkörpers kompensieren, da aufgrund der federnden Mittel bzw. einer Feder Ausgleichsbewegungen, insbesondere Ausgleichsbewegungen ohne Reduzierung der benötigten Anpresskraft möglich sind. Vorteilhafterweise kann eine mechanische Überlastung ausgeschlossen werden. Von Vorteil ist weiter, dass beispielsweise im abgestellten Zustand des rutschhemmenden Mittels zur Verhinderung oder Verringerung des Durchrutschens der Antriebsräder das federnde Mittel dazu dient, die Stellung, in der das rutschhemmende Mittel abgestellt ist, zu fixieren bzw. das Mittel zur Verhinderung und/oder zur Verringerung des Durchrutschens der Antriebsräder in die Stellung zurückzuführen, in der das rutschhemmende Mittel abgestellt ist. Es ist möglich, dass das federnde Mittel eine Spannfeder umfasst oder als Spannfeder oder als ein von der Funktion her gleichwertiges Mittel ausgeführt ist. Die durch das rutschhemmende Mittel aufgebrachte Normalkraft kann so beispielsweise durch die Auslegung der Spannfeder individuell eingestellt werden.

Darüber hinaus kann vorgesehen sein, dass Ausgleichsmittel jeweils endseitig des Gelenkarmes angeordnet sind und/oder Gelenkarm und Materialbunker mittelbar und/oder unmittelbar miteinander verbinden.

Darüber hinaus kann vorgesehen sein, dass Steuerungs- und/oder Regelungsmittel vorgesehen sind, mittels derer die Anstellmittel aktivierbar, vorzugsweise automatisch aktivierbar sind. '

Bevorzugt wird es, wenn die Steuerungs- und/oder Regelungsmittel Antischlupfregelungsmittel und/oder Schlupfüberwachungsmittel umfassen, wobei mittels der Schlupfüberwachungsmittel ein Durchrutschen des Antriebsrades erkennbar ist und/oder mittels der Antischlupfregelungsmittel das rutschhemmende Mittel an die Siebtrommel anstellbar ist. Im Falle eines selbst angetriebenen rutschhemmenden Mittels, beispielsweise einer selbst angetriebenen Andrückrolle, besteht die Möglichkeit, diese stetig mitlaufen zu lassen oder bei Bedarf zuzuschalten. Dies kann beispielsweise steuerungstechnisch über eine Drehzahl- oder Stillstandsüberwachung der Trommel realisiert werden. Eine automatische Zuschaltung kann beispielsweise über eine Drehzahl- oder Stillstandsüberwachung des Trommelkörpers ermöglicht werden. Insbesondere ist denkbar, dass die Steuerungs- und/oder Regelungsmittel bei Erkennen der Notwendigkeit eines Zuschaltens der rutschhemmenden Mittel zur Verhinderung und/oder Verringerung des Durchrutschens der Antriebsräder das Anstellmittel, insbesondere den Linearantrieb wie z. B. Hydraulik-, Pneumatik- und/oder Elektrozylinder aktivieren.

Die Zuschaltung des Systems kann manuell, elektrisch, hydraulisch oder pneumatisch erfolgen.

Besonders vorteilhaft ist es, wenn das Siebtrommelsystem fahrbar ausgeführt ist, vorzugsweise als Fahrzeuganhänger oder Fahrzeugaufbau.

Es ist möglich, dass das mittels des rutschhemmende Mittel unabhängig von der Drehrichtung der Siebtrommel mittelbar und/oder unmittelbar ein Durchrutschen des Antriebsrades verhinderbar und/oder verringerbar ist.

Denkbar ist ferner, dass das rutschhemmende Mittel beliebig entlang der Längsachse der Siebtrommel anordenbar ist.

Weitere Einzelheiten und Vorteile der Erfindung sollen nun anhand eines in der Zeichnung gezeigten Ausführungsbeispiels näher erläutert werden. Es zeigen:
- Fig. 1:: Eine perspektivische Ansicht des Siebtrommelsystems mit abgestellter Andrückrolle,
- Fig. 2:: eine Seitenansicht des Siebtrommelsystems mit abgestellter Andrückrolle,
- Fig. 3:: eine perspektivische Ansicht des Siebtrommelsystems mit angestellter Andrückrolle,
- Fig. 4:: eine Seitenansicht des Siebtrommelsystems mit angestellter Andrückrolle,
- Fig. 5:: eine schematische Darstellung der Kräfteverteilung des Siebtrommelsystems bei abgestellter Andrückrolle und
- Fig. 6:: eine schematische Darstellung der Kräfteverteilung des Siebtrommelsystems bei angestellter Andrückrolle.

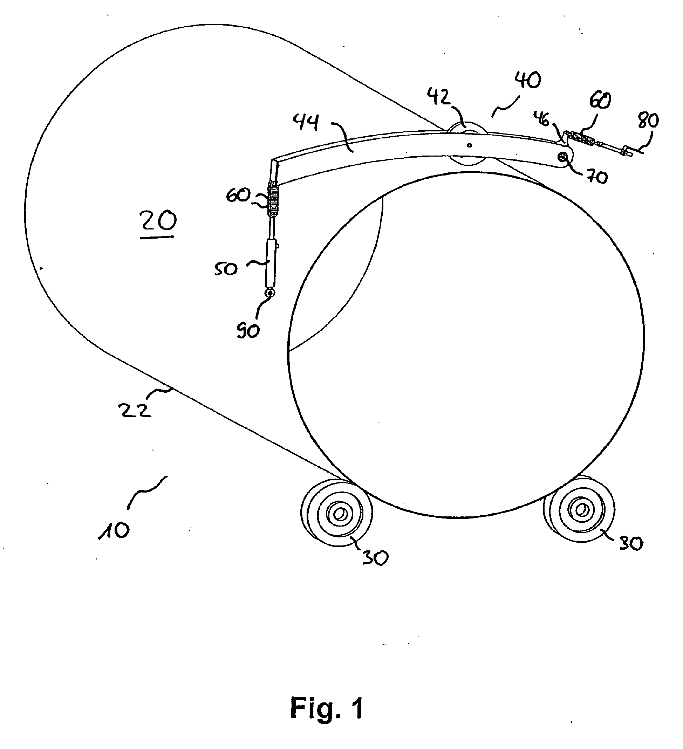

Fig. 1 zeigt ein erfindungsgemäßes Siebtrommelsystem 10, wobei eine Siebtrommel 20 auf Antriebsrädern 30 gelagert ist. Das Siebtrommelsystem 10 ist fahrbar ausgeführt und auf einem nicht näher dargestellten Fahrzeuganhänger aufgebaut.

In Fig. 1 sind hierzu zwei Antriebsräder 30 gezeigt, die jeweils direkt mit einem Elektromotor oder Hydraulikmotor, der nicht näher dargestellt ist, angetrieben werden. Am anderen Ende der Siebtrommel 20 sind ebenfalls zwei weitere Antriebsräder, die nicht näher dargestellt sind, angeordnet, die ebenfalls jeweils direkt angetrieben werden. Somit wird die Siebtrommel 20 auf insgesamt vier Antriebsrädern 30 gelagert und durch diese Antriebsräder 30 auch kraftschlüssig angetrieben. Die Antriebsräder 30 rollen dabei direkt auf der Außenfläche 22 der Siebtrommel 20 ab. Es können ein, zwei, drei oder vier Räder 30 angetrieben werden.

Kopfseitig der Siebtrommel 20 ist ein rutschhemmendes Mittel 40 zum Verhindern und Verringern des Durchrutschens der Antriebsräder 30, die auf der Außenhülle 22 der Siebtrommel 20 abrollen, angeordnet. Das Mittel 40 ist im Fig. 1 dargestellten Zustand nicht auf die Außenfläche 22 der Siebtrommel 20 angestellt.

Das rutschhemmende Mittel 40 besteht dabei aus einem Gelenkarm 44, der über einen Anlenkpunkt 70 mit einem der Siebtrommel 20 benachbarten Element des Siebtrommelsystems 10 verbunden ist. Von Vorteil ist es dabei insbesondere, wenn der Anlenkpunkt 70 am Siebtrommelbunker bzw. Materialbunker oder am Maschinenrahmen des Siebtrommelsystems 10 angeordnet ist.

Alternativ kann vorgesehen sein, dass die Andrückrolle 42 direkt senkrecht ohne einen Gelenkarm 44 an die Siebtrommel 20 anstellbar ausgeführt ist.

Im Gelenkarm 44 ist eine Andrückrolle 42 drehbar gelagert, die durch Anstellung des rutschhemmenden Mittels 40 auf der Außenhülle der Siebtrommel 20 abrollen kann.

Zur Anstellung der Andrückrolle 42 ist ein als Linearantrieb 50 ausgeführtes Anstellmittel 50 vorgesehen, das mittels des Anlenkpunktes 90 ebenfalls am nicht näher dargestellten Siebtrommelbunker oder Maschinenrahmen des Siebtrommelsystems 10 befestigt wird. Zur Vorbeugung von mechanischen Spannungen sind Ausgleichsmittel 60 vorgesehen, wobei es sich bei den Ausgleichsmitteln 60 z. B. um Federn handelt. Hierzu ist/sind eine oder mehrere Federn 60 zwischen dem Zylinder 50 und einem Ende des Gelenkarmes 44 vorgesehen. Hierdurch ergibt sich insbesondere der Vorteil, dass die durch die Andrückrolle 42 ausgeübte Anpresskraft nahezu konstant gehalten werden kann.

Des Weiteren ist zwischen dem Anlenkpunkt 80 und dem anderen Ende des Gelenkarmes 44 eine weitere Feder 61 vorgesehen, so dass das rutschhemmende Mittel 40 Ausgleichsbewegungen durchführen kann. Die Feder 60 bzw. die Federn 60 übernehmen die Funktion einer Ausgleichsfeder, während die Feder 61 dazu dient, im abgestellten Zustand den Gelenkarm 44 mit der Andrückrolle 42 von der Siebtrommel 20 abgestellt zu halten.

Die zwischen Anlenkpunkt 80 und Anlenkpunkt 70 befindliche Feder 61 greift dabei nicht direkt am Gelenkarm 44 an, sondern einem extra hierfür herausstehenden Federhalter 46, so dass sich ein verbesserter Angriffspunkt für die durch die Feder 61 ausgeübte Federkraft am in Fig. 1 dargestellten rechten Ende des Gelenkarms 44 ergibt. Darüber hinaus bewirkt die am Federhalter 46 angreifende Feder 61 mit ihrer Federkraft, dass im nicht angestellten Zustand, also im Grundzustand bei nicht angestellter Andrückrolle 42, der Gelenkarm 44 von der Siebtrommel 20 weggezogen wird.

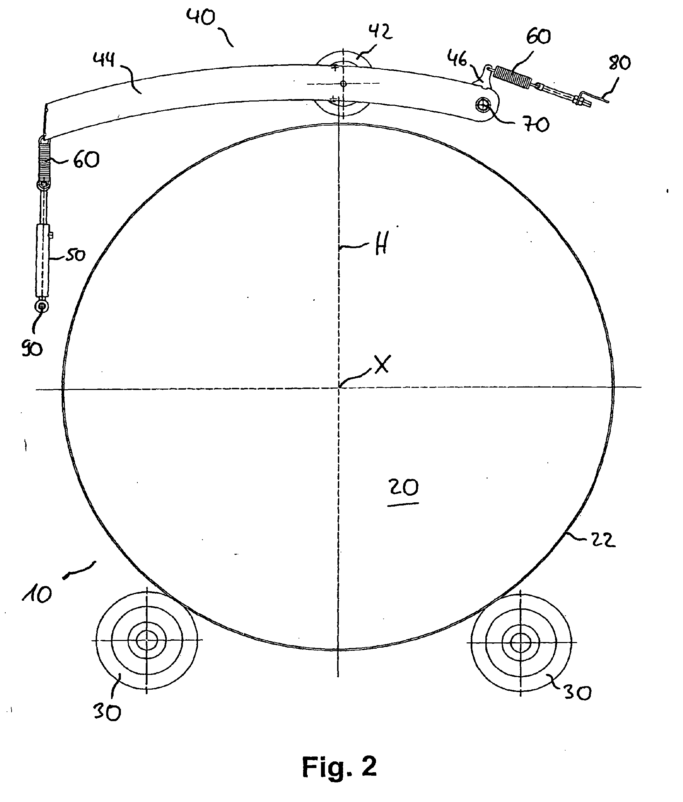

Fig. 2 zeigt dabei das in Fig. 1 dargestellte Siebtrommelsystem 10 in Seitenansicht. Wie sich aus Fig. 2 gut ergibt, ist der Gelenkarm 44 über den Anlenkungspunkt 70 exzentrisch in Bezug auf die Rotationsachse X und die Hochachse H der Siebtrommel 20 angelenkt. Dadurch ergibt sich der Vorteil, dass eine zusätzliche Kraft, insbesondere durch die Gewichtskraft des Gelenkarms 44 an die Siebtrommel 20 weitergegeben werden kann.

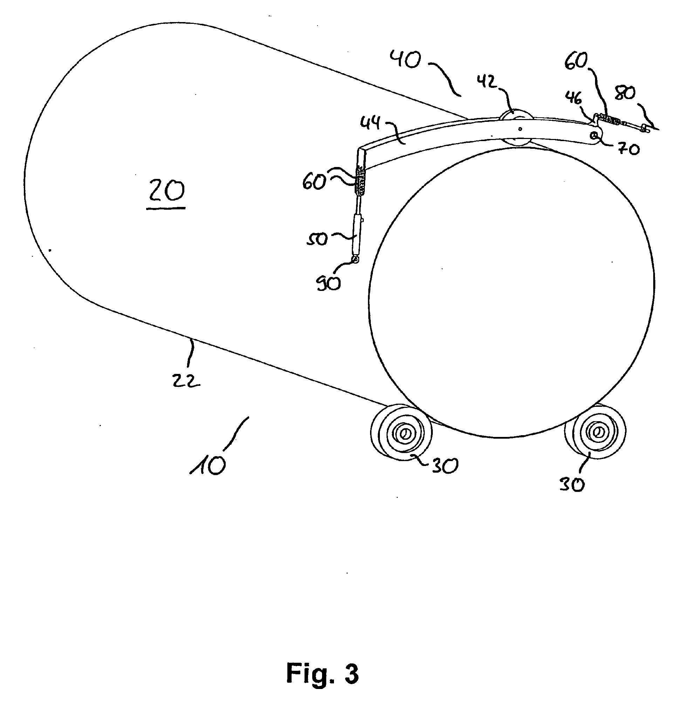

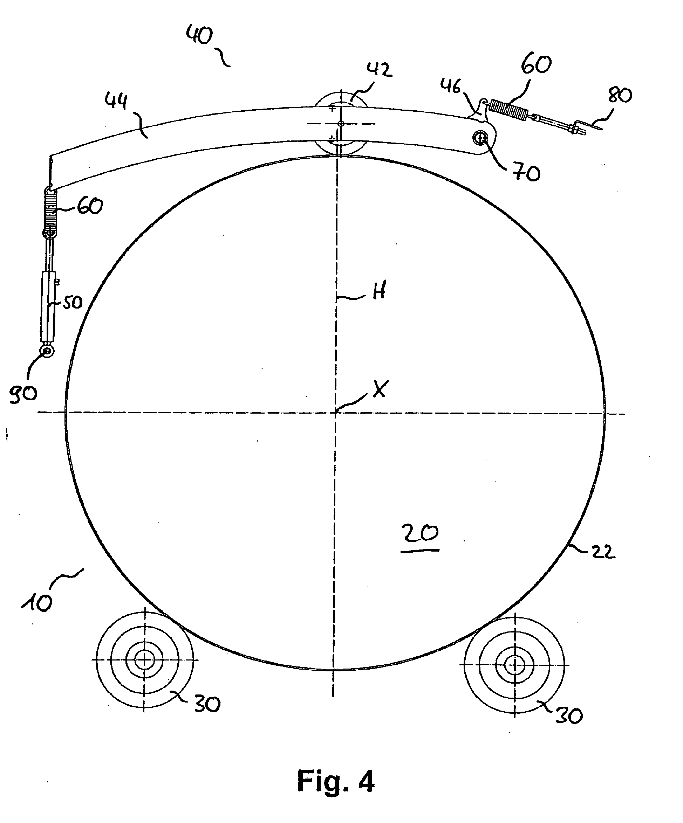

Fig. 3 und 4 zeigen die in Fig. 1 und 2 dargestellten Ansichten des Siebtrommelsystems 10, wobei jedoch die Andrückrolle 42 gegen die Außenwandung 22 der Siebtrommel 20 angestellt ist.

Vorzugsweise wird die Anstellbewegung dann ausgelöst, wenn mittels eines nicht näher dargestellten Steuerungs- und/oder Regelungssystems erkannt wird, dass die Siebtrommel 20 steht, obwohl die Antriebsräder 30 angetrieben sind. In diesem Fall wird auch das durch die Schlupfüberwachungsmittel erfasste Signal durch die Steuerungs- und/oder Regelungsmittel das Antischlupfregelungsmittel ausgelöst, wodurch der Linearantrieb 50 eingefahren wird, so dass das Andrückrad 42 oder die Andrückrolle 42 gegen die Siebtrommel 20 angestellt wird.

Grundsätzlich kann vorgesehen sein, dass eine manuelle Anstellung der Andrückrolle 42 an die Siebtrommel 20 über einen Schalter oder ein Display möglich ist. Vorzugsweise ist vorgesehen, dass das Anstellen automatisch erfolgt.

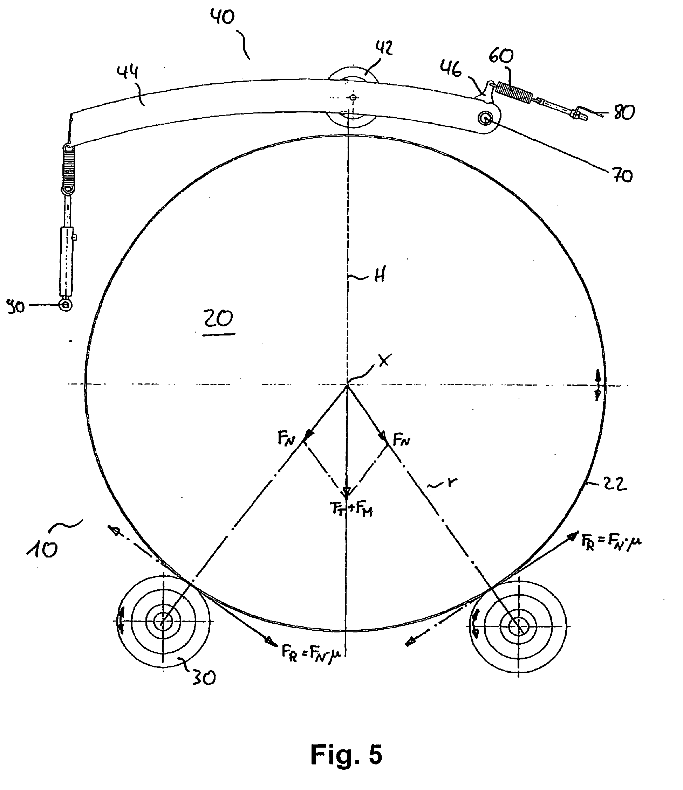

Fig. 5 zeigt die in Fig. 2 dargestellte Ansicht des Siebtrommelsystems 10, wobei die anliegenden Kräfte eingezeichnet sind. In Fig. 5 wirkt nur die durch die Eigenlast der Siebtrommel 20 resultierende Normalkraft F_{N}, die sich entsprechend aufteilt, auf die Antriebsräder 30.

Die resultierende Normalkraft F_{N} resultiert aus der Kraft F_{T} aus Masse der Trommelkonstruktion sowie der Kraft F_{M} aus Masse des zu siebenden Materials. Die übertragbare Reibkraft F_{R} errechnet sich mit dem Reibungskoeffizienten µ aus dem Produkt der Normalkraft F_{N} mit dem Reibungskoeffizienten p.

Bei günstigen Umgebungsbedingungen reicht die so erzielbare übertragbare Reibkraft F_{R} aus, um das notwendige Antriebsmoment für die Siebtrommel 20, das sich aus dem Produkt des Radius r des Antriebsrades 30 mal der übertragbaren Reibkraft F_{R} ergibt, aus, um die Siebtrommel 20 anzutreiben.

Dies kann jedoch bei ungünstigen Umgebungsbedingungen und vermindertem Reibungskoeffizienten nicht mehr der Fall sein.

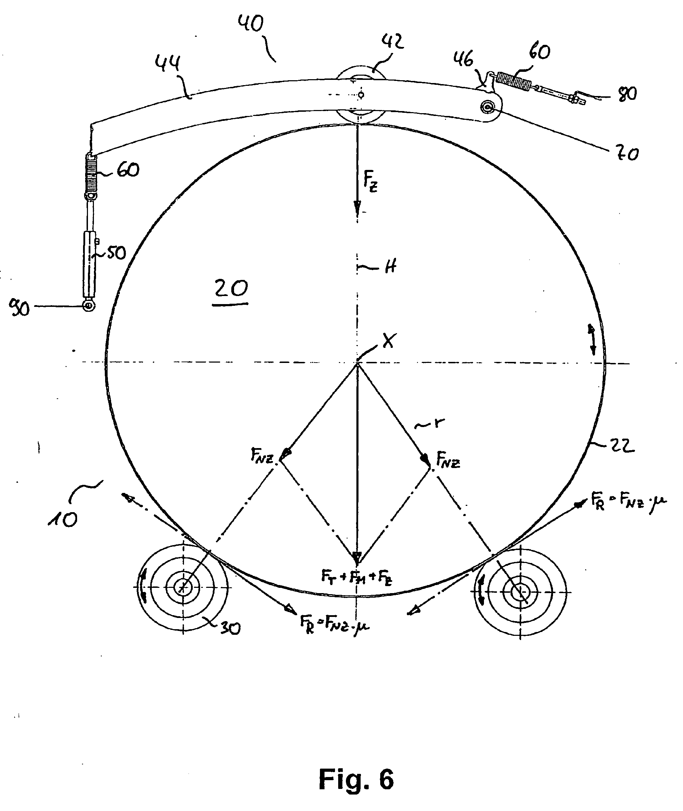

Daher wird in einem derartigen Fall, wie in Fig. 6 dargestellt, die Antriebsrolle 42 angestellt, so dass sich hierdurch eine Zusatzkraft F_{Z} ergibt. Auf die Antriebsräder 30 wirkt somit eine resultierende Normalkraft mit Zusatzkraft F_{NZ}, so dass trotz vermindertem Reibungskoeffizienten µ trotzdem ein ausreichendes Drehmoment bzw. eine ausreichende übertragbaren Reibkraft F_{R} bereitgestellt werden kann.

Es erhöht sich aufgrund der erhöhten resultierenden Normalkraft mit Zusatzkraft F_{NZ} die übertragbare Reibkraft F_{R}.

## Patentansprüche

1. Siebtrommelsystem (10) mit einer Siebtrommel (20), wobei die Siebtrommel (20) durch wenigstens ein auf einer Außenwandung (22) der Siebtrommel (20) abrollendes Antriebsrad (30) antreibbar ist bzw. vorzugsweise kraftschlüssig antreibbar ist, wobei wenigstens ein rutschhemmendes Mittel (40) vorgesehen ist, mittels dessen mittelbar und/oder unmittelbar ein Durchrutschen des Antriebsrades (30) verhinderbar und/oder verringerbar ist,
**dadurch gekennzeichnet,**
**dass** wenigstens ein Ausgleichsmittel (60), welches wenigstens ein federndes Mittel umfasst oder als solches ausgeführt ist und mit dem wenigstens einen rutschhemmenden Mittel (40) in Verbindung steht, vorgesehen ist, so dass eine Ausgleichsbewegung des rutschhemmenden Mittels (40) realisierbar ist.

2. Siebtrommelsystem nach Anspruch 1, **dadurch gekennzeichnet, dass** das rutschhemmende Mittel (40) eine Andrückrolle (42) und/oder ein Andrückrad (42) umfasst oder als solches ausgeführt ist.

3. Siebtrommelsystem nach Anspruch 1 oder 2, **dadurch gekennzeichnet, dass** das rutschhemmende Mittel (40) eigens angetrieben oder freimitlaufend ausgeführt ist und/oder dass das rutschhemmende Mittel (40) oder wenigstens ein Teil des rutschhemmenden Mittels (40) auf der Außenwandung (22) der Siebtrommel (20) abrollbar ausgeführt ist und/oder dass das rutschhemmende Mittel (40) axial zu der Siebtrommel verfahrbar ist, um einen Zugang zur Siebtrommel (20) insbesondere für einen Siebtrommelwechsel zu ermöglichen.

4. Siebtrommelsystem nach einem der vorhergehenden Ansprüche, **dadurch gekennzeichnet, dass** wenigstens ein Anstellmittel (50) vorgesehen ist, mittels dessen das rutschhemmende Mittel (40) gegen die Siebtrommel (20) und/oder von der Siebtrommel (20) abstellbar ist.

5. Siebtrommelsystem nach einem der vorhergehenden Ansprüche, **dadurch gekennzeichnet, dass** das rutschhemmende Mittel (40) einen Gelenkarm (44) umfasst, mittels dessen eine Andrückrolle (42) und/oder ein Andrückrad (42) an die Außenwandung (22) der Siebtrommel (20) an- und/oder abstellbar ist, oder dass das rutschhemmende Mittel (40) ohne Gelenkarm (44) ausgeführt ist und eine Andrückrolle (42) und/oder ein Andrückrad (42) umfasst, das an die Außenwandung (22) der Siebtrommel (20) an- und/oder abstellbar ist, insbesondere mittels einer senkrecht verstellbaren Mechanik an- und/oder abstellbar ist, wobei der Gelenkarm (44) kopfseitig der Siebtrommel (20) und/oder exzentrisch bezogen auf die Rotationsachse (X) und/oder die Hochachse (H) der Siebtrommel (20) angeordnet ist.

6. Siebtrommelsystem nach Anspruch 5, **dadurch gekennzeichnet, dass** das Ausgleichsmittel (60) jeweils endseitig des Gelenkarmes (44) angeordnet sind.

7. Siebtrommelsystem nach einem der vorhergehenden Ansprüche, insbesondere nach Anspruch 5, **dadurch gekennzeichnet, dass** das Siebtrommelsystem (10) einen Maschinenrahmen und/oder einen Materialbunker umfasst, aus dem vorzugsweise Siebgut der Siebtrommel (20) zuführbar ist, wobei der Gelenkarm (44) oder eine senkrecht hierzu verstellbare Mechanik des rutschhemmenden Mittels mittelbar und/oder unmittelbar am Maschinenrahmen und/oder Materialbunker angelenkt ist.

8. Siebtrommelsystem nach einem der Ansprüche 4-7, insbesondere nach Anspruch 5, **dadurch gekennzeichnet, dass** das Anstellmittel (50) einen Linearantrieb umfasst, der vorzugsweise endseitig an einem Ende des Gelenkarms (44) angelenkt ist, wobei der Linearantrieb einen Hydraulikzylinder und/oder einen Pneumatikzylinder und/oder einen Elektrozylinder und/oder eine manuelle Spindel umfasst oder als solcher ausgeführt ist.

9. Siebtrommelsystem nach einem der Ansprüche 4-8, **dadurch gekennzeichnet, dass** Steuerungs- und/oder Regelungsmittel vorgesehen sind, mittels derer die Anstellmittel (50) aktivierbar, vorzugsweise automatisch aktivierbar sind.

10. Siebtrommelsystem nach Anspruch 9, **dadurch gekennzeichnet, dass** die Steuerungs- und/oder Regelungsmittel Antischlupfregelungsmittel und/oder Schlupfüberwachungsmittel umfassen, wobei mittels der Schlupfüberwachungsmittel ein Durchrutschen des Antriebsrades (30) erkennbar ist und/oder mittels der Antischlupfregelungsmittel das rutschhemmende Mittel (40) an die Siebtrommel (20) anstellbar ist.

11. Siebtrommelsystem nach einem der vorhergehenden Ansprüche, **dadurch gekennzeichnet, dass** das Siebtrommelsystem (10) fahrbar ausgeführt ist, vorzugsweise als Fahrzeuganhänger oder Fahrzeugaufbau.

12. Siebtrommelsystem nach einem der vorhergehenden Ansprüche, **dadurch gekennzeichnet, dass** das mittels des rutschhemmende Mittel (40) unabhängig von der Drehrichtung der Siebtrommel (20) mittelbar und/oder unmittelbar ein Durchrutschen des Antriebsrades (30) verhinderbar und/oder verringerbar ist.

13. Siebtrommelsystem nach einem der vorhergehenden Ansprüche, **dadurch gekennzeichnet, dass** das rutschhemmende Mittel (40) beliebig entlang der Längsachse der Siebtrommel (20) anordenbar ist.

## Claims

1. Rotary screen system (10) with a rotary screen (20), wherein the rotary screen (20) can be driven by at least one drive wheel (30) rolling on an exterior (22) of the rotary screen (20), or preferably can be moved by friction, wherein at least one anti-slippage instrument (40) is provided, by means of which a slipping through of the drive wheel (30) can be indirectly and/or directly prevented and/or reduced,
**characterised in that**,
at least one balancing instrument (60) is provided, which comprises at least one springloaded element or is designed as such and with which at least one anti-slippage instrument (40) is connected, so that a balancing motion of the anti-slippage instrument (40) can be achieved.

2. Rotary screen according to claim 1, **characterised in that** the anti-slippage instrument (40) comprises a press roll (42) and/or a press wheel (42) or is designed as such.

3. Rotary screen system according to claim 1 or 2, **characterised in that** the anti-slippage instrument (40) is designed to be self-driven or freewheeling and/or that the anti-slippage instrument (40) or at least one part of the anti-slippage instrument (40) is designed so that it can be rolled on the exterior (22) of the rotary screen (20) and/or that the anti-slippage instrument (40) can be moved axially to the rotary screen in order to make access to the rotary screen (20) possible, in particular in order to change the rotary screen.

4. Rotary screen according to one of the preceding claims, **characterised in that** at least one engaging instrument (50) is provided, by means of which the anti-slippage instrument (40) can be parked against the rotary screen (20) and/or away from the rotary screen (20).

5. Rotary screen system according to one of the preceding claims, **characterised in that** the anti-slippage instrument (40) comprises an articulated arm (44), by means of which a press roll (42) and/or a press wheel (42) can be engaged or parked onto the exterior (22) of the rotary screen (20), or that the anti-slippage instrument (40) is designed without an articulated arm (44) and comprises a press roll (42) and/or a press wheel (42) that can be engaged and/or parked onto the exterior (22) of the rotary screen (20), in particular can be engaged and/or parked by means of a vertically-adjustable mechanism, wherein the articulated arm (44) is arranged on the head side of the rotary screen (20) and/or eccentrically relative to the axis of rotation (X) and/or the vertical axis (H) of the rotary screen (20).

6. Rotary screen system according to claim 5, **characterised in that** the balancing instruments (60) are each arranged on the end side of the articulated arm (44).

7. Rotary screen system according to one of the preceding claims, in particular according to claim 5, **characterised in that** the rotary screen system (10) comprises a machine frame and/or a material hopper, from out of which the rotary screen's sieved material (20) can be delivered, wherein the articulated arm (44) or a mechanism of the anti-slippage instrument that can be adjusted perpendicularly relative to this is connected indirectly and/or directly to the machine frame and/or material hopper.

8. Rotary screen system according to one of the claims 4-7, in particular according to claim 5, **characterised in that** the engaging instrument (50) comprises a linear drive that is preferably connected on its end side on an end of the articulated arm (44), wherein the linear drive comprises a hydraulic cylinder and/or a pneumatic cylinder and/or an electric cylinder and/or a manual spindle or is designed as such.

9. Rotary screen system according to one of the claims 4-8, **characterised in that** the control and/or regulating instruments are provided, by means of which the engaging instrument (50) can be activated, preferably automatically activated.

10. Rotary screen according to claim 9, **characterised in that** the control and/or regulating instruments comprise anti-slippage regulating instruments and/or slip monitoring instruments, wherein by means of the slip monitoring a slipping through of the drive wheel (30) is identifiable and/or by means of the anti-slippage regulating instrument the anti-slippage instrument (40) can be engaged onto the rotary screen (20).

11. Rotary screen system according to one of the preceding claims, **characterised in that** the rotary screen system (10) is designed to be moveable, preferably as a vehicle trailer or vehicle superstructure.

12. Rotary screen system according to one of the preceding claims, **characterised in that**, by means of the anti-slippage instrument (40), independently of the direction of rotation of the rotary screen (20), slipping through of the drive wheel (30) can be indirectly and/or directly prevented and/or reduced.

13. Rotary screen system according to one of the preceding claims, **characterised in that** the anti-slippage instrument (40) can be arranged in a chosen location along the longitudinal axis of the rotary screen (20).

## Revendications

1. Système de tambour cribleur (10) comprenant un tambour cribleur (20), dans lequel le tambour cribleur (20) peut être entraîné ou peut de préférence être entraîné par adhérence par au moins une roue motrice (30) roulant sur une paroi extérieure (22) du tambour cribleur (20) et dans lequel il est prévu au moins un moyen antidérapant (40) au moyen duquel un glissement de la roue motrice (30) peut être empêché et/ou réduit directement et/ou indirectement,
**caractérisé**
**en ce qu'**il est prévu au moins un moyen de compensation (60), qui comprend au moins un moyen d'amortissement ou qui est réalisé en tant que tel et qui est en relation avec l'au moins un moyen antidérapant (40), de telle sorte qu'un mouvement de compensation du moyen antidérapant (40) peut être réalisé.

2. Système de tambour cribleur selon la revendication 1, **caractérisé en ce que** le moyen antidérapant (40) comprend un galet de pression (42) et/ou une roue de pression (42) ou il est réalisé en tant que tel.

3. Système de tambour cribleur selon la revendication 1 ou 2, **caractérisé en ce que** le moyen antidérapant (40) est entraîné de façon autonome ou réalisé de façon librement rotative et/ou **en ce que** le moyen antidérapant (40) ou au moins une partie du moyen antidérapant (40) est réalisé(e) de façon à pouvoir rouler sur la paroi extérieure (22) du tambour cribleur (20) et/ou **en ce que** le moyen antidérapant (40) peut être déplacé axialement par rapport au tambour cribleur afin de permettre un accès au tambour cribleur (20), en particulier pour un remplacement du tambour cribleur.

4. Système de tambour cribleur selon l'une quelconque des revendications précédentes, **caractérisé en ce qu'**il est prévu au moins un moyen de calage (50) au moyen duquel le moyen antidérapant (40) peut être calé contre le tambour cribleur (20) et/ou écarté du tambour cribleur (20).

5. Système de tambour cribleur selon l'une quelconque des revendications précédentes, **caractérisé en ce que** le moyen antidérapant (40) comprend un bras articulé (44) au moyen duquel un galet de pression (42) et/ou une roue de pression (42) peut être calé(e) sur la paroi extérieure (22) du tambour cribleur (20) et/ou en être écarté(e), ou **en ce que** le moyen antidérapant (40) est réalisé sans bras articulé (44) et comprend un galet de pression (42) et/ou une roue de pression (42) qui peut être calé(e) sur la paroi extérieure (22) du tambour cribleur (20) et/ou en être écarté(e), en particulier au moyen d'un dispositif mécanique réglable verticalement, étant entendu que le bras articulé (44) est agencé du côté frontal du tambour cribleur (20) et/ou de façon excentrique par rapport à l'axe de rotation (X) et/ou à l'axe vertical (H) du tambour cribleur (20).

6. Système de tambour cribleur selon la revendication 5, **caractérisé en ce que** le moyen de compensation (60) est agencé respectivement du côté d'une extrémité du bras articulé (44).

7. Système de tambour cribleur selon l'une quelconque des revendications précédentes, en particulier selon la revendication 5, **caractérisé en ce que** le système de tambour cribleur (10) comprend un bâti de machine et/ou un silo de matériau à partir duquel le produit à cribler peut de préférence être amené au tambour cribleur (20), étant entendu que le bras articulé (44) ou un dispositif mécanique du moyen antidérapant réglable verticalement par rapport à celui-ci est articulé directement et/ou indirectement sur le bâti de machine et/ou le silo de matériau.

8. Système de tambour cribleur selon l'une quelconque des revendications 4 à 7, en particulier selon la revendication 5, **caractérisé en ce que** le moyen de calage (50) comprend un entraînement linéaire qui est de préférence articulé du côté d'une extrémité à une extrémité du bras articulé (44), étant entendu que l'entraînement linéaire comprend un vérin hydraulique et/ou un vérin pneumatique et/ou un vérin électrique et/ou une broche manuelle ou il est réalisé en tant que tel.

9. Système de tambour cribleur selon l'une quelconque des revendications 4 à 8, **caractérisé en ce qu'**il est prévu des moyens de commande et/ou de réglage au moyen desquels les moyens de calage (50) peuvent être activés, de préférence automatiquement.

10. Système de tambour cribleur selon la revendication 9, **caractérisé en ce que** les moyens de commande et/ou de réglage comprennent des moyens de réglage d'adhérence et/ou des moyens de surveillance du patinage, étant entendu qu'un glissement de la roue motrice (30) peut être détecté à l'aide des moyens de surveillance du patinage et/ou le moyen antidérapant (40) peut être calé sur le tambour cribleur (20) à l'aide des moyens de réglage d'adhérence.

11. Système de tambour cribleur selon l'une quelconque des revendications précédentes, **caractérisé en ce que** le système de tambour cribleur (10) est réalisé de façon mobile, de préférence en tant que remorque automobile ou caisse automobile.

12. Système de tambour cribleur selon l'une quelconque des revendications précédentes, **caractérisé en ce qu'**un glissement de la roue motrice (30) peut être empêché et/ou réduit directement et/ou indirectement au moyen du moyen antidérapant (40) indépendamment du sens de rotation du tambour cribleur (20).

13. Système de tambour cribleur selon l'une quelconque des revendications précédentes, **caractérisé en ce que** le moyen antidérapant (40) peut être agencé à n'importe quel endroit le long de l'axe longitudinal du tambour cribleur (20).
